# EUROPEAN PATENT APPLICATION

(11) **EP 3 659 430 A1**
(43) Date of publication of application: **03.06.2020**
(21) Application number: 18838435.8
(22) Date of filing: 24.07.2018
(51) Int. Cl.: A01G 13/02, A01G 9/14

(54) **SYSTEM FOR PROTECTING CROPS FROM THE WEATHER**

(30) Priority: 26.07.2017 ES 201700682
(71) Applicant: Viña Solorca, S.L., 09300 Roa de Duero (Burgos) (ES)
(72) Inventor: BALBÁS ARROYO, Víctor, 09300 Roa de Duero (ES)
(74) Representative: Villamor Muguerza, Jon
(86) International application number: PCT/ES2018/070528
(87) International publication number: WO 2019/020858

(57) **Abstract**

The invention relates to a system for protecting crops from the weather which comprises a set of guiding cables (16) supported by a series of posts (1A, 1B, 2), a module (28) between each pair of intermediate posts (2), said module being formed by:
• a stationary protection box (13), through which the guiding cables (16) pass, which supports a first end of a covering material (29);
• a pulled cover (9), attached to the guiding cables (16), which supports the second end of the covering material (29), a tipping blade (18) at the sides and part of the ridge, as well as toothed blades (20) arranged to trail along the ground and engage with the trunks of the plants to be covered as the pulled cover (9) advances.

## Description

### Field of the Art

The present invention relates to a system for protecting crops from the weather, preferably and specifically conceived for intensive row crops, such as fruit trees or vines, and other crops of any type, for the purpose of constituting protection means to prevent or mitigate as much as possible the effects of adverse weather, such as frosts, hails, fog, and winds, on crops which may be damaged to a great extent by same.

Furthermore, another object of the invention is the ability to control the evolution of the fruits regardless of external weather conditions, i.e., to cause the ripening or delay thereof and the conditions of the latter, depending on what is desired and within limits. It has also been an intention to complement with optional farming works, making use of the installation and the movement of the device.

### Background of the Invention

Devices for protecting crops against frosts are known, these devices being based on a tower formed by a screw established at the top of the tower, which suctions the hot air generated by a boiler and discharges it on nearby crops, increasing the temperature of the surrounding environment.

Other systems or means for protecting crops against frosts are also known, these systems or means being based on spray irrigation and consisting of maintaining a mixture of water and ice on the most sensitive parts of the plant, making use of the release of heat when the water goes from liquid at 0°C to solid at the same temperature to compensate for the temperature drop which may affect the vine or fruit trees. This system requires a complete coverage of the entire surface to be protected, where irrigation must be performed at the same time, involving sections of pipes ten times greater than those of an irrigation different from conventional irrigation and a considerably larger amount of water.

Systems for protecting crops against hail are also known, these systems being based on agro-textile nets acting as a barrier, retaining or stopping said hail in a kinetic manner due to the elasticity of the gauze used as a net, such that to achieve effective protection the nets must be positioned not only horizontally, but also vertically, for when the hail is accompanied by strong winds.

Systems for protecting crops against winds are also known, these systems being based on wooden posts, as well as metal and concrete tubes which are fixed to the ground for the crop by means of espaliers, for the purpose of constituting support means for laying a lattice of wires between the posts acting as a support for the branches of the fruit trees, allowing them to climb for a better development, thereby preventing damage by strong winds.

Another way of protecting crops against adverse weather involves conventional green houses which protect crops against frosts, hails, dense fog, rains, and winds. However, the green house system causes an unnatural growth of the crop, preventing optimal fruit development, which subsequently affects the quality of the fruit.

In a patent search, invention patents PCT/ES2009/000532 and P200703118 which correspond to the same inventor and applicant and describe a *"Protector Climatológico Integral para Frutales y Viñas* (Integral Weather Protector for Fruit Trees and Vines)" have been selected.

Another series of documents can also be mentioned, such as: US2004134122, WO 03007696, ES 2 255 798, US5311699, GB2251777, DE565280, ES 2 157 453, ES 2 015 388, ES 278637, ES 246495, ES441777, and U0215833, such that all these documents relate in one way or another to systems for protecting crops against inclement weather, although in no case does the protection against any atmospheric agent occur simultaneously in any of these documents, and on many occasions they are not even effective for the function for which they were intended, regardless of the complexity of many of them.

Moreover, farming works such as tipping the crops and cutting the tips of the stalks when the vegetation exceeds a limit, are described in the state of the art.

These tasks are common, particularly in vineyards, using tipping devices coupled to agricultural machinery, and they are performed manually using sickles and scissors. Weed control is also performed. These cultivation works between plants are usually performed with devices called cultivators coupled to the drive systems of the agricultural machinery. In some cases, they are provided with sensors which, upon engaging with the trunks of the plants, activate a hydraulic system, causing the system which incorporates either the blade or plough to come out of the line. These systems sometimes damage the plants given that the trunks are not all perfectly vertical, also when it is not the right time to cultivate the land.

There are also some devices with a directional flat and a blade on either side thereof, these devices having a type of vane which, when pressed through the soil, is forced to get into the line formed by the plants, coming out of the line upon engaging with the trunks of the plants. These systems also damage the plants given that the blades become sharper as they trail along the ground, with the trunks being cut said cutting edge.

For that reason, herbicides are used in most cases.

### Summary of the Invention

Specifically, the present invention relates to a system for protecting crops from the weather and for farming crops, preferably and specifically conceived for intensive row crops, such as fruit trees or vines and other crops of any type. It constitutes protection means to prevent or mitigate as much as possible the effects of adverse weather, such as frosts, hails, fogs, and winds, on crops which may be damaged to a great extent by same.

Another object of the invention is the ability to control the evolution of the fruits regardless of external weather conditions, i.e., to cause the anticipated ripening or delay thereof and the conditions of the latter, depending on what is desired and within limits.

The system is furthermore structurally simple, easily implemented, easily handled, and has a high degree of effectiveness.

Specifically, the system of the invention is based on arranging a plurality of posts or props inserted in the ground, arranged between crops aligned therewith, such that each post has associated therewith a box called a protection box, fixed by means of flats that are screwed thereto forming the structure and perforated and also serve to regulate the separating distances of the crop.

Said box is formed by U-shaped sheets, one on each side of the crop and another in the ridge, forming attachment and two angles. It is provided with holes and serves to store the covering material. This material can be textile or raffia plastic, etc. It is longitudinally perforated and its holes are reinforced along the edges, either with heat-sealed plastic material or another material. These holes are referred to as covering openings. These openings are related to the holes of the protection boxes as they have the same perimetral distance and are facing one another. Cables called guiding cables go through same.

Hollow screws go through the holes of the protection boxes, attaching the sides and ridges forming said box, acting as a shaft. They also have the function of reinforcing the wall of said box, making the sliding of the guiding cables more difficult and fixing the edges of the protective material at the same time.

The protection box also has screws in any configuration, causing the fixing of the covering material to be more secure. Alternatively, this material can also be glued.

The other end of the covering material is fixed in the same manner to another sheet called a pulled cover, has the same holes, and is arranged a little lower so as to act as a closure with the protection box. It does not require fixing flats given that the guiding cables fixing and going through same force it to maintain the same format, as these guiding cables go through the hollow screws of the protection box, being supported on two points between one stake and another.

The sides forming the U are in opposite direction.

As its name indicates, the pulled cover serves to pull the covering material and as a closure and cover for the material. In the rear part of the pulled cover, the guiding cables are secured to a fastener and on the side thereof there is a tensioner, maintaining the centrality of said holes. The cables secured in said cover go through the openings of the covering material and the holes of the hollow screws of the protection box, being fastened in the tensioner of the contiguous pulled cover.

The intermediate post, the protection box, the fixing flats, the hollow screws, the covering material with openings, the guiding cables, the pulled cover, the fastening fixing screws, and the tensioners form a so-called module. Therefore, the row is formed by modules.

The final modules have the particularity of connecting the entire row with the end posts. One end (end B) is initially arranged close to same and the other end (end A) maintains the established distance therebetween. The final pulled cover (of end A) has a type of reinforcement finishing in a central fastener forming the structure thereof. The guiding cables end in the latter, depending now on a cable, referred to as the final cable, which connects with the mechanism of the ends, with there being one on each side of the crop. These cables go through the guide pulleys to the driving pulleys. Other cables are placed fixed to the protection box and the end post going through a type of washers placed in the upper part of the pulled cover serving as a support and guide thereof, since the support of the final cable and the tension thereof may be insufficient at that point. These cables are called finishing cables.

The end posts must be firmly fixed to the ground. To that end, placing a type of arms which serve as a stop when being driven has been envisaged. The lateral inclination of the row in the event of strong winds is thereby prevented. It is also secured by a screw driven into the ground through a tensed cable which prevents front inclination.

A trench is made at the ends of the rows, driving the end post into same until abutting the arms. It is driven in an inclined manner, so it better supports the tension of the row at the front.

This system has been envisaged so as not to hinder the tasks of burying said arms and reinforcing them with the weight of the soil.

Electric cables are put at the same time through said trench, being introduced through the gap of the post.

The mechanism accompanying same can be both a manual mechanism with a lever or ratchet wrench and an automatic mechanism by means of geared motors with locking and applying the technology it requires for start-up and shutdown.

The guide pulleys will be able to be regulated for the purpose of perfectly centering the final cable.

Optionally, spring pulleys can be placed at one of ends B such that they will perform their function of winding and unwinding, maintaining the tension in the row and absorbing dilations.

The same mechanisms can also be installed at the opposite end, with the difference of the guiding cables being fastened directly to the driving mechanisms.

The fastener of the final cable can also be arranged, but to that end, more space is required since the module at this point is just next to the end, and cropland is lost, since this space left at the end of the rows is reserved for turning and maneuvering agricultural machinery.

The components of the system are not heavy and the guiding cables are supported on two points between the modules. Therefore, the pulling capacity will offer very little resistance.

When the system is activated, the guiding cables pull the pulled covers they have fixed thereto. The covers pull one another in unison through the fastener the tensioners have and the guiding cables pass freely through the hollow screws of the protection box, sliding through the openings of the covering material. In turn, the pulled covers pull the covering material they have secured thereto, taking it out of the protection box and unfolding said material along the ridge and on either side of the crop, making a tunnel, with the path thereof ending right in the rear part of the contiguous protection box, forming a complete closure between the modules, with the crop being protected from any inclement weather. The guiding cables will act as the framework of the covering material, covering at the same time the holes of the openings, with a perfect frame being formed to withstand strong winds. When it is activated the other way around, the pulled covers press on the covering material, the guiding cables slide through the openings thereof and come out freely through the hollow screws of the protection box, depositing the covering material therein, the covering material being in order, folded, and closed by said cover.

For proper system operation, it is important for all the modules to be at the same distance.

The system will be able to perform simple and at the same time effective farming works. To that end, it has been envisaged to place, on one of the sides forming the pulled cover, a detachable blade in the part that moves closer to the crop, on the two sides and ridges. This blade is referred to as a tipping blade and serves to improve system operation, cutting excessive vegetation as it develops without obstacle.

The tipping task, particularly in vineyards, is performed with agricultural machinery, making several passes and cutting the excessive vegetation invading the sides and ridges, making the penetration of phytosanitary treatments more effective and favoring the reception of more sunlight by the fruit, thereby improving fruit ripening.

Once the covering material is folded, these tipping blades are arranged inside the protection box, which prevents possibly cutting the personnel intervening in the crop. Expenses relating to fuel, manpower, and machinery are also prevented as passes with agricultural machinery for tipping do not have to be performed, and no personnel who manually performs same is required.

Considering the opportunities this device offers, it has been envisaged to be use in controlling weeds, making use of the weakness thereof during the germination period. The method is easy and simple and it relates to placing four cross-shaped toothed blades, the teeth of which are directed towards the ground, so its name is the same: toothed blades. A central tube connects said blades, serving for the introduction of a shaft which is in turn fixed to the pulled cover. The desired distance is regulated during the placement thereof, the teeth of the blades being on the ground level. The latter are placed such that they invade the central line marked by the plants. There is one on each side of the crop, fixed to each pulled cover. When the device is activated, the guiding cables pull the pulled covers, unfolding the covering material, and at the same time the toothed blades move together, trailing along the soil and moving same. When one of them engages with the trunk of the plants, the blade is forced to move backwards, rotates in circle about its shaft, coming out of and bordering said trunk. During its rotation, the blade that has already exceeded the trunk goes into the line, and so on and so forth until reaching the contiguous module where the path ends. When the device is activated the other way around, the covering material is gradually folded, the toothed blades perform the same task during the return thereof, arriving at the starting point, leaving the moved soil. Every time the device for protecting from weather is activated, the toothed blades act as they are stationary, therefore the crust of the soil is also moved the same number of times, the weeds being controlled, preventing their germination.

The system consisting of toothed blades of the invention is different from that described in the state of the art because the teeth thereof are perpendicular to the ground and the planar part of the blade is that which engages with the trunk regardless of the inclination thereof, offering very little resistance due to the rotation of the shaft and the small pressure that trailing on the soil caused.

Therefore, by analyzing this system, the economic savings it entails in terms of manpower, fuel, and chemicals can be observed, preventing atmospheric contamination as well as soil, river, and ground water contamination due to the use of herbicides.

### Detailed Description of the Drawings

To initiate and facilitate the understanding of the description of the system, it is considered appropriate to describe the drawings bearing in mind that they provide an illustrative guideline to the invention. Support for the present invention can be found in the following set of drawings attached below with an explanation thereof.

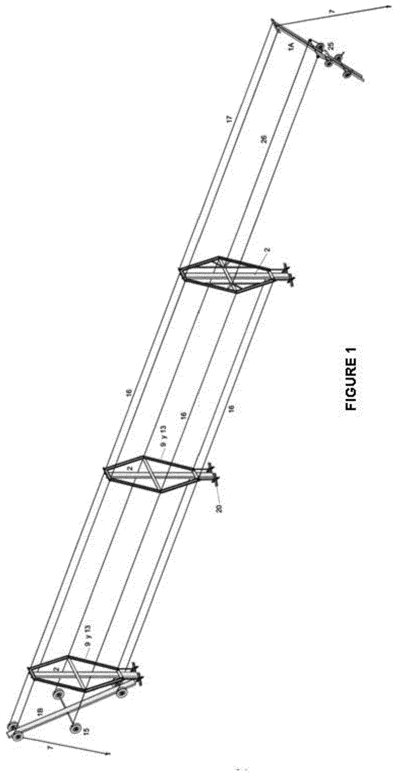

Figure 1 shows a crop farming system in an inactive state.

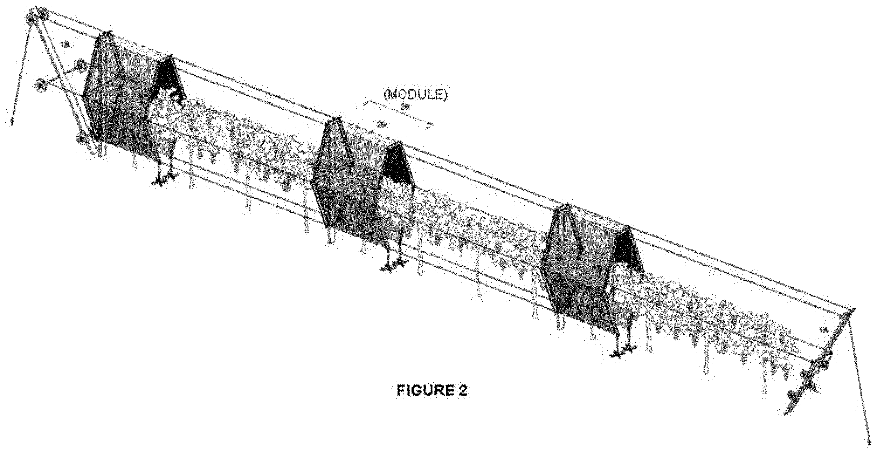

Figure 2 shows the start of the unfolding of the covering material. As can be observed, the crop to be protected is a vineyard. A diamond-shaped format has been designed. The ridge forms a narrow closure, however, a wider chamber is arranged in the center as this is where most vegetation and fruit can be found, providing better protection against frosts as well as the inertia of the hail. The closure in the lower part thereby provides more protection against frosts. Its aerodynamic shape splits the force of the wind in the center, causing sliding at the upper part and counteracting said force in the lower part.

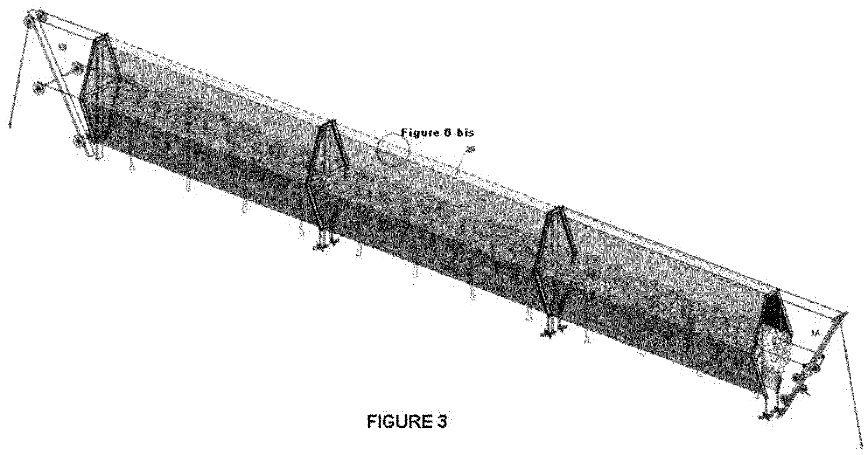

Figure 3 shows the covering material completely unfolded.

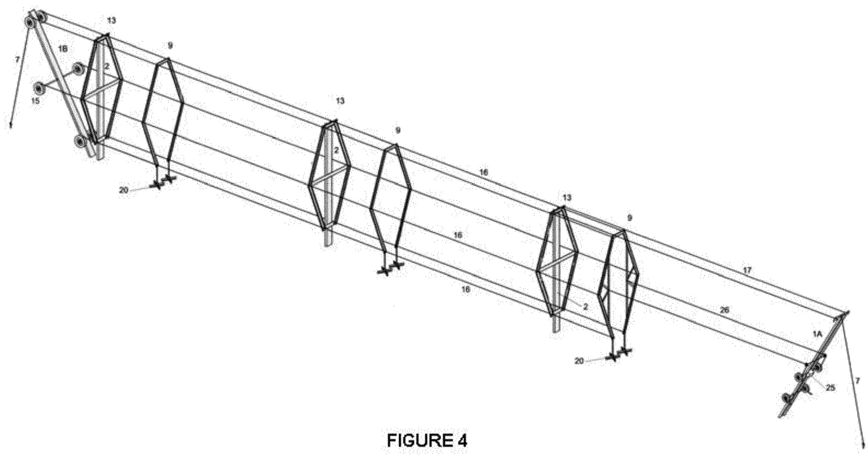

Figure 4 shows numerical details of the system without the covering material at the start of activation.

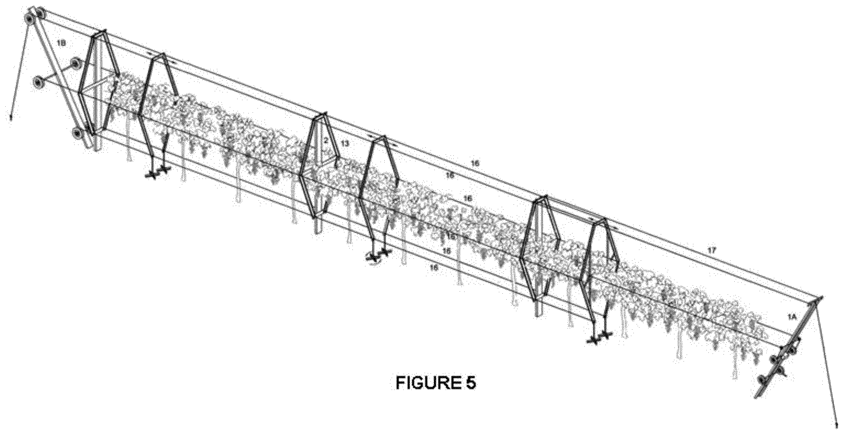

Figure 5 shows the view of the device integrated in the crop, depicting an espalier vineyard, the fixing wires the espaliers have are not depicted to prevent confusions with the guiding cables.

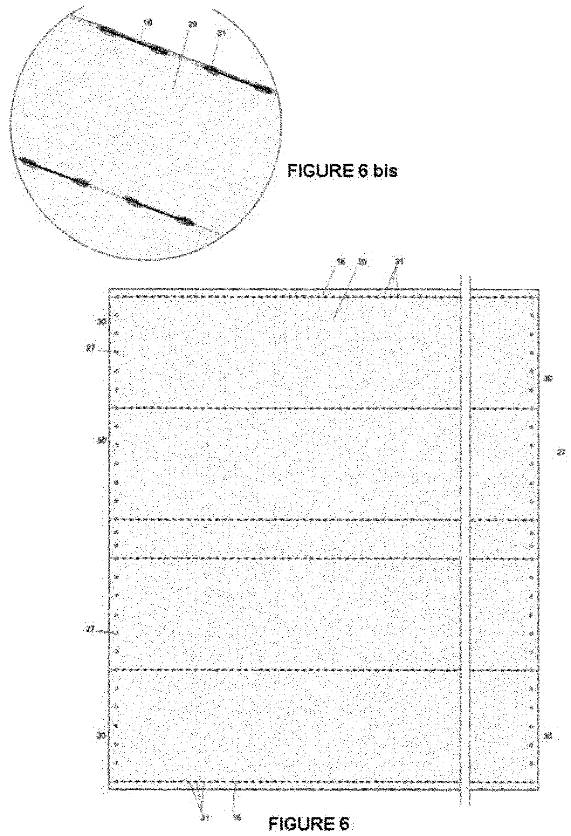

Figure 6 shows the sheet of the covering material (29), with openings (31), also the edges (30) with holes for fixing thereof (27). These edges (30) can also be glued, wherein an enlarged detail of the introduction of the guiding cables (16) through the covering openings (31) can be seen in Figure (6-bis).

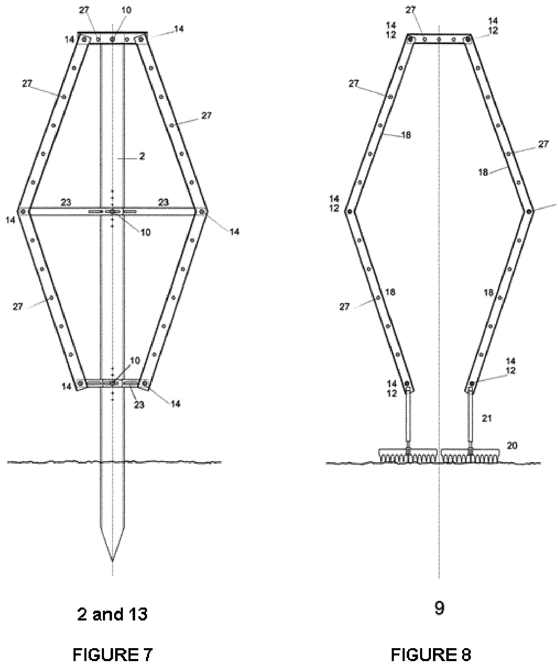

Figure 7 shows the protection box (13) with the intermediate post (2), the fixing flats (23), the hollow screws (14), wherein it can be observed in the upper part how they act as a shaft to enable regulating the desired distance to the crop. Ground level 0 and the driven post (2), as well as the screws (27) where the edge (30) of the covering material is secured can also be seen.
Figure 8 shows the pulled cover 9, also with the hollow screws acting as a shaft (14). It does not require a fixing flat (23), the guiding cables (16) force it to maintain the same dimensions as the protection box (13). The point where the guiding cable is secured (12) can also be seen and the tipping blade (18) is also indicated although not very clearly. The toothed blades (20) with their shaft (21) secured to the pulled cover (9) can be seen in the lower part in contact with the ground, and the fixing screws (27) for securing the edge (30) of the covering material are also indicated.

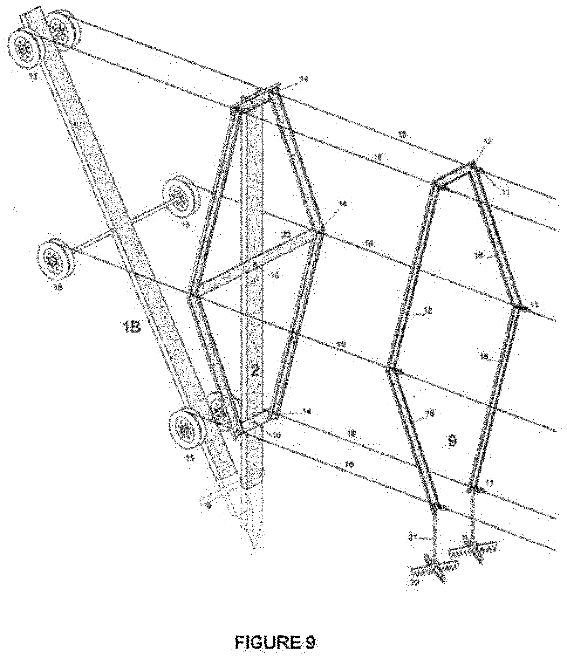

Figure 9 shows the end post (1B) with a spring pulley (15), an intermediate post (2), a protection box (13), a pulled cover (9), and toothed blades (20). A tensioner (11) and tipping blades (18), as well as a driven post (1B) can also be seen.

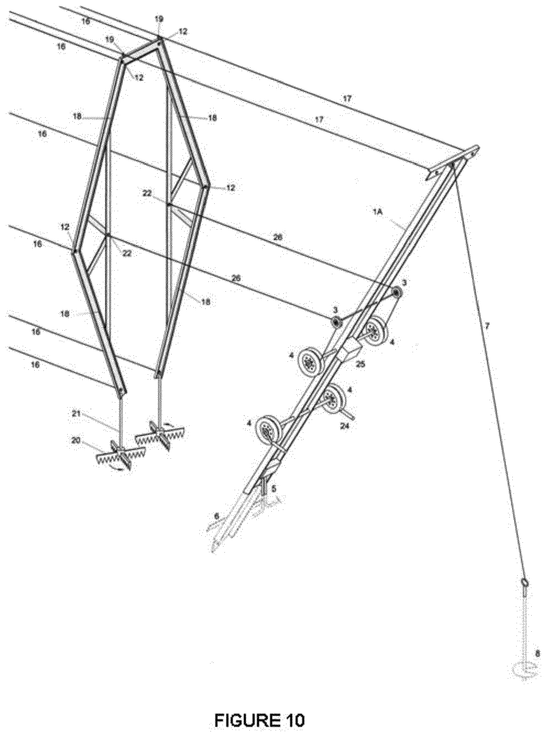

Figure 10 shows the post (1A) with the manual mechanism (24) and the motor-driven mechanism (25), the final pulled cover (9). This figure also shows the finishing cables (17) and the washers that act as guide and fixing (19), as well as the reinforcement (22) with a fastener of the pulled cover (13) where the final cable (26) is fastened, going through the guide pulleys (3) to the driving mechanisms (25), with the driven post (1A) and arms (6) as well as the introduction of the electric cables (5) together with the tensed cable (7) secured to the screw (8) being shown.
Figure 11 shows a module (28) without the covering material, with the point of the tensioners (11), as well as the hollow screws (14) and guiding cables (16), being indicated.
Figure 12 shows an enlarged angle of the protection box (13), where a hollow screw (14) is seen in the vertex through which a guiding cable (16) passes.
Figure 13 shows a part of the pulled cover (9), the tipping blade (18) with the guides (32) associated therewith. It also shows the securing (12) for the guiding cable (16) with the tensioner 11, where the guiding cable (16) from the contiguous pulled cover is fastened, maintaining centrality.

- 1.: End posts 1A 1B
- 2.: Intermediate post
- 3.: Guide pulley
- 4.: Driving pulley
- 5.: Electric cables
- 6.: End post buried arms
- 7.: End post tensioning cable
- 8.: Driven screw
- 9.: Pulled cover
- 10.: Protection box flat fixing screw
- 11.: Tensioners

- 12.: Fixed guiding cable fasteners
- 13.: Protection box
- 14.: Hollow screws
- 15.: Spring pulleys
- 16.: Guiding cables
- 17.: Finishing cables
- 18.: Tipping blade
- 19.: Final pulled cover washers
- 20.: Toothed blades
- 21.: Toothed blade shaft
- 22.: Final pulled cover fastener
- 23.: Protection box fixing flats
- 24.: Manual mechanism
- 25.: Motor-driven mechanism
- 26.: Final cable
- 27.: Covering material edge fixing screw
- 28.: Modules
- 29.: Covering material
- 30.: Covering material edges
- 31.: Covering material openings
- 32.: Tipping blade guides

### Preferred Embodiment of the Invention

As can be seen in the mentioned drawings, the system of the invention comprises a series of posts (2) associated with other end posts (1A) (1B) forming a row with said ends. They are securely fixed to the ground.

They are driven in an inclined manner (9 and 10) and a tensed cable (7) is attached with a screw (8). Furthermore, arms (6) fixed to said post abut with the ground in a trench, which will also serve for putting the electric cables (5) through the inside thereof (1A) (1B).

They house the mechanism required for the operation of the guide pulley (3)-driving pulley (4) system and driving mechanisms which can be manual mechanisms (24) with a lever or ratchet wrench, as well as automatic mechanisms with geared motors (25). They are mechanically designed to work in both directions. These mechanisms (25) are fastened by the final cable of the row (26).

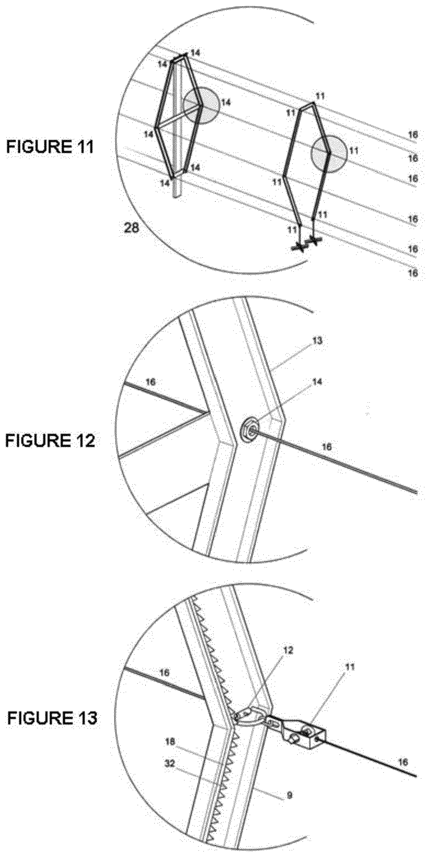

The same systems can also be placed at end (1B). However, the placement of spring pulleys (15) has been selected. They will be designed to act perfectly as they wind and unwind, acting according to the commands of the mechanism installed at the other end (1A), maintaining the constant tension and absorbing dilations. The modules (28) are fixed by the independent stake posts (2). The protection box is secured in the stake posts (2) by the flats (23) with which it is associated and they are in turn fixed to the hollow screws (14), serving as a shaft with same, regulating the desired distance to the crop. The protection box (13) contains the covering material (29) which is fixed by an edge (30) in the inside thereof (13), in part by the hollow screws (14) and the rest by screws (27), and it could also be glued thereto. Similarly, the pulled cover (9) fixes the other end (30). There are associated in the rear part of said pulled covers (9) a tensioner (11) and a fastener (12). The actual guiding cables (16) of each module are secured in the latter. The guiding cables (16) go through the openings of the covering material (31), coming put freely through the hollow screws (14) of the protection box (13). As seen in Figure 13, the guiding cables (16) are interrupted in the pulled covers (9), such that continuity is assured by the tensioners (11), the fasteners (12), and the pulled cover itself. The tensioners (11) allow adjusting the dimension of the part of the guiding cable (16) corresponding to each module (28). Each segment of the guiding cable (16) emerges from a pulled cover (9) and is fastened in the tensioner (11) of the contiguous pulled cover (9), and so on and so forth until all the modules are connected, forming the row.

They are connected at the ends to the mechanisms of the ends (1A-1B), the placement of the modules (28) starting next to the end (1B), with the last module (28) of the row being an odd number module. It is important to emphasize that all the modules must maintain the same distance. In the odd number module (28), the final pulled cover (9') has a reinforcement with a centered fastener (22). The path of the guiding cables (16) ends in the final pulled cover (9'), with it now depending on the final cable (26) fixed to the fastener of the pulled cover (22) and to the driving mechanisms of the end (1A). The odd number module (28) has finishing cables (17) fixed to the protection box (13) and the end posts (1A), going through washers (19) which the final pulled covers (9') have associated therewith, acting as guide and fixing, since the support of the final pulled cover (9') depends partially on the final cable (26), which is insufficient. Therefore, the finishing cables (17) are parallel to the guiding cables (16) and the final cable (26).

Spring pulleys (15) are placed at the end (1B) connecting directly with the guiding cables (16).

When the driving mechanisms (25) are activated, the guiding cables (16) pull the pulled covers, and they in turn pull the covering material (29), and go through the hollow screws (14) of the protection boxes (13). The covering material (29) gradually unfurls at the same time as its openings (31) slide along the guiding cables (16), whereas the spring pulleys (15) maintain at the same time the tension of the entire row which is covered on both sides and in the ridges, forming a type of tunnel, protecting the crop, with it being locked at the end of its path. When activated the other way around, the driving mechanism (25) is unlocked. The spring pulleys (15) use the accumulated energy, winding and following the commands of the driving mechanism (25), maintaining the tension of the entire row. The pulled covers (9) act like their name indicates.

During the folding thereof, the covering openings (31) slide on the guiding cables (16), forming double folds on either side thereof. Said cables come out through the hollow screws (14) of the protection box (13), depositing the covering material (29) in the protection box (13) until it is perfectly folded and closed as it is pushed by the corresponding pulled cover (9).

The system also incorporates simple farming works that are at the same time effective, such as the tipping of the stalks, particularly in vineyard crops. To that end, on the side forming the U of the pulled cover (9), specifically the side closer to the crop, a blade (18) will placed associated with guides (32) where vegetation is introduced.

As it moves, it will cut the tips of the stalks the vegetation of which protrudes and hinders the operation of the system.

Toothed blades (20) are placed invading the line formed by the plants and they trail along the soil, preventing weeds from growing. The device acts when there is a need to remove weeds, and it also works when it is activated for other reasons. The system can be complemented with remote management since, with the mechanisms, they can be mechanically actuated from an electronic control unit located in the crop line, working with master control and actuating the drive motors of each of the protection mechanisms independently and simultaneously in all the units of the motor-driven integral protector. That electronic control unit performs the functions of a crop manager and is intended for the automation and remote management of the farm for crop maintenance, such that the operation of the mentioned motors occurs actively, i.e., that the electronic control is performed "*a priori*" in real time, supervising the weather through as many probes as required and automatically activating the operation, such that it is possible to act before possible damage and not thereafter.

These weather probes are provided in one and the same assembly with a temperature sensor, a relative humidity sensor, a barometer and an anemometer. The data recorded by these probes are sent in real time through radio to the electronic control unit which analyzes said data and estimates at what time, according to its internal program, each of the protection mechanisms has to be activated.

Finally, it should be stated that the mentioned electronic control unit consists of completely parameterizable and programmable remote management equipment acting depending on the input data received through a communications module (GSM/RADIO), acting according to the program on respective actuating relays of the aforementioned geared motors, such that with the previous system it is possible to interact on tripping relays of the geared motors in an automated and remote manner from any GSM terminal by means of alphanumerical or numerical radio-paging while at the same time the operation status of the farm and weather data from the probes can be received by the same means, the entire assembly being powered by a power connection and a converter for use with any type of available power supply: such as a connection to the mains, autonomous generators, photovoltaic solar energy, etc.

By means of the described system, in addition to the advantages and features that it offers, automation and a degree of protection based on each season of crop development can be achieved, it not being a problem to conserve the fruit at the harvesting time without the fear of it being damaged by unexpected rain or other reasons at any time, even at night, without depending on hired labor and the presence thereof in the fields.

Likewise, this system prolongs the fruiting season and therefore the harvesting season, without the fear of early frosts, where late ripening can be dealt with for the purpose of harvesting the fruit at the suitable time of quality and grade.

In summary, the invention relates to a system for the comprehensive protection and prevention of the damaging effects of adverse weather, frosts, hails, strong winds, rains, and fogs. It is characterized in that it contains in its units posts (2) acting as stakes which are driven to the ground and distributed, as deemed necessary, in lines of trees for covering the extension of the crop.

At their ends, other posts called ends (1A, 1B) are responsible for fixing and tensioning the entire row.

These posts house the mechanism required for their operation, Figures (9 and 10). Each stake post is associated with an independent module (28), all of which forming an attachment through the guiding cables (16) fixed in the tensioners of the pulled cover (11) of the contiguous module (28).

The covering material (29) is in the protection box (13). When the system is activated, the guiding cables (16) pull the pulled covers (9) secured thereto and it closes the covering material (29), passing freely through the holes of the hollow screws (14) of the protection box (13), going through the openings (31) of the covering material (29) unfolding along the sides and ridges of the crop, forming a tunnel, the crop being protected fitting between the modules (28). When it is activated the other way around, it folds over the pulled cover (9) sliding on the openings of the covering material (31), the guiding cables (16) go through the hollow screws (14) of the protection box, leaving the covering material (29) in order, folded, and closed.

Furthermore, making use of the opportunities offered by the system, it will perform tipping works, particularly in vineyards, removing and reducing excess vegetation. To that end, the sides of the U forming the pulled cover (9) and oriented close to the crop have a blade (18) as well as part of the ridge. Each time that it is activated, they will perform their task, controlling weed growth through cross-shaped toothed blades (20) rotating about a central shaft (21). These blades move with their teeth trailing along the crust of the soil, bordering the trunks of the plants invading the central part of the crop line, rotating backwards about the shaft thereof upon engaging with the trunks, forcing the blade which has exceeded the same to get into the line.

The rows thereof are formed, from beginning to end, by driven posts, acting as stakes to independent modules (28) which, when connected by the guiding cables, act integrally protecting the crops.

The ends thereof have arms (6) that act as a stop when said post is driven into a trench, being used at the same time for putting the electric cables (5) through the inside thereof.

It is inclined backwards. These arms (6) prevent lateral inclinations in the event of strong winds, and a tensed cable (7) from the post to a screw prevents front inclination.

The end posts (1A-1B) thereof contain the mechanism required for operation, one of them having spring pulleys (15) which maintain the constant tension, both during folding and unfolding, absorbing dilations, adapting to the working speed of the driving mechanism.

The final pulled covers (9) have a reinforcement with a fastener (22) where a final cable (26) is secured to each side of the crop and in turn to the mechanism (25), with the assembly now depending on the guiding cables thereof.

The pulled covers (9) have the guiding cables (16) secured thereto by tensioners (11), adjusting the tension equally for all the modules (28), causing the mechanisms (25) to transmit the force without head loss from start to end.

The hollow screws (14) allow the sliding of the guiding cables (16) and fix the edges (30) of the covering material (29) and act as a shaft in regulating distances to the crop by means of fixing flats (23) fixed to the stakes (2) as well as by means of the upper shafts.

The finishing cables (17) at the ends (1A), where the modules (28) are odd number modules, are secured to the protection box (13) and to said end (1A), going through washers (19) placed in the upper part of the pulled cover (9) since the support thereof would be suspended as there is no other module (28) depending on the final cable (26).

The covering material is fixed at the edges (30) to the formation of the protection box (13) and to the pulled cover (9) by the hollow screws (14), where the fixing thereof can be complemented by screws (27) or adhesives.

The openings (31) forming the covering material (29) are fixed thereto by the guiding cables (16), sliding therethrough causing double folds on either side of the guiding cables (16).

These mark the width of the protection box (13) given that the sum of the folds on either side coincides with the width of the box (13).

Each unfolded row forms a frame against wind with the guiding cables (16) being fixed to the sides and ridges the stake posts (2) and the tension the spring pulleys of end (1B) and the mechanism of (1A) provide in a constant manner.

Each module (28) is independent, the guiding cable (16) can be disconnected, and in the event of failure, replaced with another regardless of the place it occupies in the row without having to disassemble the others. It is also important that these modules (28) may come from the workshop already assembled, and it would only be necessary to screw the flats (23) of the modules (28) to the stake posts (2) and fasten the guiding cables (16) to the stakes (11).

The system is readily adapted to any farm, in spite of how complicated its terrain may be. The system acts the same in rows with many modules (28) as in rows with a single module (28), with the folding and unfolding time being the same in any case. The guiding cables (11) also act similarly due to their flexibility in unevenness of the terrain. The modules can be adapted to the shape and dimensions the crops require. If the format requires angles, hollow screws (14) are placed in the vertices thereof and the guiding cable (16) performs its function on either side thereof. The inclined, vertical, or horizontal lines that are formed act similarly.

The covering material (29) is folded into the protection box (13) closed by the pulled cover (9), keeping said material (29) from deteriorating, causing the use thereof to be more long-lasting while at the same time considerably reducing the environmental impact.

Both the protection box and the pulled box can also be made with right angles, that of the protection box making a bottom angle and the other a side angle, and that of the pulled cover placed the other way around, one side acting as a side and the other a cover, forming a tube and the covering material also being closed.

Crop applications can be installed in the system.

The sides forming the U of the pulled cover (9) closer to the crop can have blades (18) to perform tipping tasks during the movements thereof, regulating the vegetation and preventing obstacles with the passage of said cover (9).

The cutting edge of the blade (18) is also arranged inside the protection box (13), so once having performed its function, it is arranged opposite the covering material (29) to prevent damaging it, as well as to prevent injuring the personnel who may intervene in the farming work. It allows removing weeds in the germination period through the toothed blades which are moved with the system, trailing along the soil, rotating about their shaft (21) as they engage with the trunks of the plants, bordering them, going into and coming out of the line marked by the plants.

Optionally, a remote management and actuation system parameterizable for the automation of general operation is included.

## Claims

1. A system for the comprehensive protection and prevention of the damaging effects of adverse weather, frosts, hails, strong winds, rains, and fogs, **characterized in that** it comprises:
guiding cables (16) supported by
a series of aligned posts (1A, 1B, 2) which act as stakes driven to the ground, two of which being
end posts (1A, 1B), responsible for fixing and tensioning the entire row, housing the operating mechanism (25);
a module (28) between each pair of intermediate posts (2) formed by:
a stationary protection box (13) which is attached to an intermediate post (2), through which the guiding cables (16) pass in respective hollow screws (14), and which supports a first end of a covering material (29);
a pulled cover (9), with a ridge and U-shaped sides, which is attached to the guiding cables (16) by means of respective tensioners (11), and which supports the second end of the covering material (29), a tipping blade (18) at the sides and part of the ridge, as well as cross-shaped toothed blades (20), with the teeth facing the ground in the lower part, with the capacity to rotate with respect to a vertical central shaft (21), arranged to trail along the ground and engage with the trunks of the plants to be covered as the pulled cover (9) advances;
the covering material (29) having openings (31) through which the guiding cables (16) are threaded,
such that in one position the covering material (29) is in the protection box (13), whereas in a second position the covering material (29) is unfolded along the sides and ridges of the crop, forming a tunnel.

2. The system for the comprehensive protection and prevention of the damaging effects of adverse weather according to claim 1, the intermediate posts (2) of which have arms (6) that act as a stop when said post is driven to the ground, preventing lateral inclinations, and the end posts (1A, 1B) are inclined outwards with respect to the row and have a tensed cable (7) attached to the ground by a screw (8).

3. The system for the comprehensive protection and prevention of the damaging effects of adverse weather according to claim 1, wherein one of the end posts (1A, 1B) has spring pulleys (15) which maintain the constant tension of the guiding cables (16).

4. The system for the comprehensive protection and prevention of the damaging effects of adverse weather according to claim 1, the final pulled cover (9') of which, which only has one protection box (13) at one end of the path thereof, have a reinforcement (22) with a fastener for a final cable (26) for pulling the assembly from the mechanism (25), and the guiding cables (16) emerge from said final pulled cover (9').

5. The system for the comprehensive protection and prevention of the damaging effects of adverse weather according to claim 1, the pulled material (29) of which is attached to the protection cover (13) through the hollow screws (14) themselves, which are used for attaching to flats (23) which attach the protection cover (13) to the intermediate post (2).

6. The system for the comprehensive protection and prevention of the damaging effects of adverse weather according to claim 4, the final pulled cover (9') of which is guided by finishing cables (17) attached to the protection cover (13) thereof and to the corresponding end post (1A) by means of washers (19) placed in the upper part of the pulled cover (9).

7. The system for the comprehensive protection and prevention of the damaging effects of adverse weather according to claim 5, the covering material (29) of which is also attached to the protection covers (13) by screws (27) or adhesives.

8. The system for the comprehensive protection and prevention of the damaging effects of adverse weather according to claim 1, wherein the covering material (29) make double folds on either side of the guiding cables (16) between pairs of consecutive openings (31).

9. The system for the comprehensive protection and prevention of the damaging effects of adverse weather according to claim 1, the row of which has angles, the vertices of the path of the guiding cables (16) being in the hollow screws (14).

10. The system for the comprehensive protection and prevention of the damaging effects of adverse weather according to claim 1, wherein in the folded position of the covering material (29) the protection box (13) and the pulled cover (9) of each module are coupled to one another to form a tube in which the folded covering material (29) is arranged.

11. The system for the comprehensive protection and prevention of the damaging effects of adverse weather according to claim 1, the tipping blade (18) of which is arranged in the contiguous protection box (13) in the unfolded position.

12. The system for the comprehensive protection and prevention of the damaging effects of adverse weather according to claim 1, including a remote management and actuation system parameterizable for the automation thereof.
